# EUROPÄISCHE PATENTANMELDUNG

(11) **EP 1 329 614 A1**
(43) Veröffentlichungstag der Anmeldung: **23.07.2003**
(21) Anmeldenummer: 02001456.9
(22) Anmeldetag: 21.01.2002
(51) Int. Cl.: F02C 3/30, F23D 17/00

(54) **Verfahren zum Betrieb eines Brenners sowie Brenner, insbesondere für eine Gasturbine**

(71) Anmelder: SIEMENS AKTIENGESELLSCHAFT, 80333 München (DE)
(72) Erfinder: Kessler, Alfred, 90562 Heroldsberg (DE)

(57) **Zusammenfassung**

Bei einem erfindungsgemäßen Verfahren zum Betrieb eines Brenners (1) wird dem Brenner (1) in einem zweistufigen Verfahren ein zur Verbrennung genutztes Gemisch zugeführt.

In einem ersten Schritt wird dabei zerstäubtes Wasser mit Verbrennungsluft (L) vermischt und dieses Gemisch wird in einem zweiten Schritt mit einem Brennstoff vermischt und dann dem Brenner zugeführt.

Ein erfindungsgemäßer Brenner umfasst Mittel zur Realisierung des erfindugsgemäßen Verfahrens.

## Beschreibung

Die Erfindung betrifft ein Verfahren zum Betrieb eines Brenners. Sie betrifft weiterhin einen Brenner, insbesondere für eine Gasturbine.

Bei einer Turbine, welche mit fossilem Brennstoff betrieben wird, insbesondere einer Gasturbine, sind in der Regel eine Anzahl von Brennern vorgesehen, welche in einer Brennkammer der Turbine angeordnet sind. Die Brenner haben im Wesentlichen die Aufgabe, ein der Brennkammer zugeführtes Brennstoffgemisch zuverlässig zu zünden, um so ein für den Betrieb der Laufschaufeln der Turbine erforderliches Heißgas zu erzeugen. Der Verbrennungsprozess soll dabei u.a. das Brennstoffgemisch unter möglichst hohem Wirkungsgrad verwerten, wobei ein möglichst geringer Anteil an Schadstoffen, beispielsweise NOx, entstehen soll.

Herkömmlichen Brennern wird dazu ein Brennstoff-Luft-Gemisch als Brennstoffgemisch sowie zerstäubtes Wasser zugeführt, welche dem Brenner gleichzeitig zugeführt werden. Dazu werden die genannten Stoffe beispielsweise dem Brenner über dessen in einen Brennraum der Brennkammer ragende Lanze zugeführt. Das zerstäubte Wasser hat dabei vor allem die Aufgabe, die beim Verbrennungsprozess entstehenden Schadstoffe, insbesondere NOx, zu reduzieren. Bei der Zuführung des zerstäubten Wassers wird dieses in das Flammenzentrum des jeweiligen Brenners eingespritzt.

Nachteilig dabei ist, dass die genannte direkte Einspritzung des Wassers in das Flammenzentrum - trotz seiner NOx - reduzierenden Wirkung - zu einer Instabilität des Verbrennungsprozesses, vor allem hinsichtlich der Stabilität der vom Brenner erzeugten Flamme, führt, da die Flamme durch das zugeführte Wasser zumindest teilweise gelöscht und/oder gehemmt wird. Treten derartige Löscheffekte bei mehreren Brennern der Turbine auf, so kann der Verbrennungsprozess nicht mehr stabil und kontinuierlich verlaufen.

Der Erfindung liegt daher die Aufgabe zugrunde, ein Verfahren zum Betrieb eines Brenners, sowie einen Brenner, insbesondere einer Gasturbine, anzugeben, welche die Nachteile bekannter Verfahren sowie Brenner vermeiden und insbesondere einen stabilen, kontinuierlichen Verbrennungsprozess gewährleisten.

Bezüglich des Verfahrens wird die Aufgabe erfindungsgemäß gelöst durch ein Verfahren zum Betrieb mindestens eines Brenners, insbesondere einer Gasturbine, wobei dem Brenner Verbrennungsluft, Wasser und ein Brennstoff zugeführt wird, wobei in einem ersten Schritt das zerstäubte Wasser mit der Verbrennungsluft zu einem Wasser-Verbrennungsluft-Gemisch vermischt wird und in einem zweiten Schritt das Wasser-Verbrennungsluft-Gemisch mit dem Brennstoff zu einem Wasser-Verbrennungsluft-Brennstoffgemisch vermischt wird.

Mit dem Begriff Wasser wird auch Dampf umfasst. Ein erfindungsgemäßes Verfahren wird auch als "wet combustion" bezeichnet.

Beim erfindungsgemäßen Verfahren handelt es sich um ein zweistufiges Verfahren ("Zweiphasen-Vormischung") bezüglich der Aufbereitung eines dem Brenner zuzuführenden Gemisches im Unterschied zum bekannten einstufigen Verfahren, bei welchem das Gemisch in einem Schritt hergestellt und dem Brenner zugeführt wird.

Dadurch ist vermieden, dass das Wasser direkt in das Flammenzentrum eingespritzt ("eingedüst") wird. Der Verbrennungsprozess verläuft daher besonders stabil und kontinuierlich.

In einer vorteilhaften Ausgestaltung der Erfindung ist der Brenner ausgebildet als Hybridbrenner, welcher sowohl mit Gas als auch mit Öl als Brennstoff betreibbar ist und der Brenner ist mit einer Gasvormisch- und einer Ölvormisch-Leitung verbunden.
Derartige Hybridbrenner werden häufig bei Gasturbinen eingesetzt, um deren Betrieb alternativ mit zwei Brennstoffen durchführen zu können.

Bei einem Hybridbrenner sind üblicherweise zwei separate Vormischleitungen, welche als Ringleitungen ausgebildet sein können, vorgesehen, in welche abhängig von einer vorgesehenen Betriebsart der Gasturbine hinsichtlich des zugeführten Brennstoffs der jeweilige Brennstoff eingespeist und mit Verbrennungsluft vermischt ist. Die jeweils andere Vormischleitung wird dann nicht benutzt und kann zur Zuführung des Wassers genutzt werden.

In einer weiteren Ausführungsform der Erfindung wird der Brenner mit Öl als Brennstoff betrieben und das Wasser der Gasvormisch-Leitung zugeführt.

Bei dieser Ausführungsform wird der Hybridbrenner mit Öl als Brennstoff betrieben; die Gasvormisch-Leitung sind bei dieser Betriebsart (Öl-Betrieb) insofern außer Funktion, als dass dieser kein Gas als Brennstoff zugeführt wird. Diese Tatsache wird ausgenutzt, um der Gasvormisch-Leitung bei Öl-Betrieb eine neue Funktion zu verleihen. In die bestehende Gasvormisch-Leitung wird das Wasser eingespeist, so dass keine separate Wasserzufuhr-Leitung nötig ist.

Dabei kommt es zu einer gleichmäßigen Zerstäubung und Verdampfung des (einzuspritzenden) Wassers und zu einer gleichmäßigen Vermischung mit der Verbrennungsluft bevor diese mit Wasser und/oder Wasserdampf angereicherte Verbrennungsluft mit dem über die Ölvormisch-Leitung eingedüsten Öl dem Brenner zugeführt wird, bevorzugt dem Bereich der sog. Pilotflamme des Brenners.
In einer anderen Ausführungsform der Erfindung wird der Hybridbrenner mit Gas als Brennstoff betrieben; die Ölvormisch-Leitung sind bei dieser Betriebsart (Gas-Betrieb) insofern außer Funktion, als dass dieser kein Öl als Brennstoff zugeführt wird. Diese Tatsache wird ausgenutzt, um der Ölvormisch-Leitung bei Gas-Betrieb eine neue Funktion zu verleihen. In die bestehende Ölvormisch-Leitung wird das Wasser eingespeist, so dass keine separate Wasserzufuhr-Leitung nötig ist.

Dabei kommt es zu einer gleichmäßigen Zerstäubung und Verdampfung des (einzuspritzenden) Wassers und zu einer gleichmäßigen Vermischung mit der Verbrennungsluft bevor diese mit Wasser und/oder Wasserdampf angereicherte Verbrennungsluft mit dem über die Gasvormisch-Leitung eingedüsten Gas dem Brenner zugeführt wird, bevorzugt dem Bereich der sog. Pilotflamme des Brenners.

Bevorzugt ist eine Armatur vorgesehen, insbesondere eine sog. Dreiwegearmatur, mittels welcher das Wasser in Abhängigkeit von einer momentanen Betriebsart des Brenners hinsichtlich des zugeführten Brennstoffs entweder der Gasvormisch-Leitung oder der Ölvormisch-Leitung zugeführt wird.

Auf diese Weise ist während des Betriebs der Gasturbine gewährleistet, dass das Wasser in die "richtige" Vormisch-Leitung eingespeist wird, also in diejenige, welcher in einer momentanen Betriebsart kein Brennstoff zugeführt und daher zur Zuleitung des Wassers nutzbar ist. Ein Wechsel des Brennstoffs führt daher auch zu einem Wechsel des Zuspeisungsortes für das Wasser: Im Öl-Betrieb wird das Wasser der Gasvormisch-Leitung, im Gas-Betrieb der Ölvormisch-Leitung über die Dreiwegearmatur zugeführt.
Die Erfindung führt weiterhin zu einem Brenner, insbesondere einer Gasturbine, bei welchem erste Mittel vorgesehen sind zur Vermischung von Wasser und Verbrennungsluft zu einem Wasser-Verbrennungsluft-Gemisch, wobei das Wasser zerstäubt wird und bei welchem weiterhin zweite, von den ersten Mitteln unterschiedliche, Mittel vorgesehen sind zur Vermischung des Wasser-Verbrennungsluft-Gemisches mit einem Brennstoff zu einem Wasser-Verbrennungsluft-Brennstoff-Gemisch.

Vorteilhaft ist der Brenner ausgebildet als Hybridbrenner für einen Betrieb mit Gas und Öl als alternative Brennstoffe und der Brenner ist mit einer Gasvormisch- und einer Ölvormisch-Leitung verbunden.

In einer anderen vorteilhaften Ausgestaltung der Erfindung ist das Wasser in die Gasvormisch-Leitung eingespeist.

Dabei ist der Brenner mit Öl als Brennstoff betrieben und die in dieser Betriebsart nicht zur Brennstoffzufuhr genutzte Gasvormisch-Leitung ist genutzt zur Einspeisung des Wassers.

In einer weiteren vorteilhaften Ausgestaltung der Erfindung ist das Wasser in die Ölvormisch-Leitung eingespeist.

Dabei ist der Brenner mit Gas als Brennstoff betrieben und die in dieser Betriebsart nicht zur Brennstoffzufuhr genutzte Ölvormisch-Leitung ist genutzt zur Einspeisung des Wassers.

Vorteilhaft ist das Wasser in Abhängigkeit von einer momentanen Betriebsart des Brenners hinsichtlich des zugeführten Brennstoffs mittels einer Armatur, bevorzugt einer Dreiwege-Armatur, in die Gasvormisch-Leitung oder in die Ölvormisch-Leitung eingespeist.
Im Folgenden wird ein Ausführungsbeispiel der Erfindung näher dargestellt.

Es zeigt:
- FIG: einen Längsschnitt durch einen erfindungsgemäßen Brenner

Ein erfindungsgemäßer Brenner 1 ist ausgebildet als Hybridbrenner zum alternativen Betrieb mit Öl und Gas als Brennstoffe. Er umfasst einen Gas-Vormischbrenner 5, einen Ölvormisch-Brenner 7, sowie einen Öl- und Gas-Diffusions- & Pilotbrenner 10. Er umfasst weiterhin eine Brenner-Kopfplatte 12 sowie eine Wasser-/Dampfvormischeindüseinrichtung 14.

Der Brenner ragt mit der Spitze seines Öl- und Gas-Diffusions- & Pilotbrenner in einen Brennkammerraum 16. Er ist brennkammerraumseitig an einer Brennwand 18 im Bereich des Gas-Vormischbrenners, und gasturbinenaußenwandseitig an einer Gasturbinenaußenwand 19 mittels der Brenner-Kopfplatte gehaltert.

Zwischen der Brennkammerwand 18 und der Gasturbinenaußenwand 19 befindet sich ein Luftkanal 20, mittels welchem dem Brenner 1 Verbrennungsluft L zugeführt ist. Der Wasser-/Dampfvormischeindüseinrichtung 14 ist Wasser W zugeführt.

Die Zuführung eines Brennstoffs zum Brenner 1 ist nicht näher dargestellt; handelt es sich bei dem Brennstoff um Öl, so ist dieses dem Öl-Vormischbrenner 7 zugeführt; wird Gas als Brennstoff benutzt, so ist dieses dem Gas-Vormischbrenner 5 zugeführt.

Beim Betrieb des Brenners 1 ist das Wasser W und/oder Wasserdampf in die Wasser-/Dampfvormischeindüseinrichtung 14 eingespeist, von dieser mittels Düsen 15 zerstäubt und in den Luftkanal 20 eingeleitet.
Im Luftkanal 20 vermischt sich das Wasser W mit der Verbrennungsluft L zu einem Wasser-Verbrennungsluft-Gemisch 24. Dieses ist dann im Folgenden je nach aktuell zugeführter Brennstoffart dem Gasvormisch-Brenner 5 oder dem Ölvormisch-Brenner 7 zugeleitet, wo sich das Wasser-Verbrennungsluft-Gemisch 24 mit dem jeweiligen Brennstoff zu einem Wasser-Verbrennungsluft-Brennstoff-Gemisch vermischt und dem Öl- und Gas-Diffusions- & Pilotbrenner 10 zur Verbrennung zugeführt wird.

Beim erfindungsgemäßen Brenner 1 findet die Bildung eines Verbrennungsgemisches daher in zwei Schritten statt. Im ersten Schritt ist das Wasser mit der Verbrennungsluft L zu einem Wasser-Verbrennungsluft-Gemisch 24 und in einem zweiten Schritt ist das Wasser-Verbrennungsluft-Gemisch 24 mit dem Brennstoff zu einem Wasser-Verbrennungsluft-Brennstoff-Gemisch vermischt. Anschließend ist letzteres mittels des Ölund Gas-Diffusions- & Pilotbrenners 10 zur Verbrennung genutzt.

Diese Ausführungsform realisiert im Unterschied zu bekannten Brennern eine eigene Wasser-Vormisch-Düsenanordnung und ist mit einer Änderung in der Konzeption bekannter Brenner verbunden; das Ergebnis stellt einen Dreistoff-Vormisch-Brenner dar für Gas, Öl und Wasser.

Die Anordnung der Wasser-/Dampf-Vormischeindüseinrichtung 14 unmittelbar vor dem Gas-Vormischbrenner 5, sozusagen am Eintrittsort der Verbrennungsluft L in den Brenner, ist ebenfalls denkbar. Bei dieser Anordnung kommt es bei der Verbrennung beider vorgesehenen Brennstoffe (Gas oder Öl) zu einer erfindungsgemäßen Durchmischung der drei Stoffe in zwei Schritten. Die Anordnung der Wasser-/Dampf-Vormischeindüseinrichtung 14 vor dem Brenner ist ein Lösungsansatz zur Realisierung eines erfindungsgemäßen Brenners 1, bei dem eine bekannte Brennerausgestaltung nur wenig abgeändert werden muss.

So können bekannte und erprobte Brenner als Ausgangspunkt für eine Ausgestaltung zu einem erfindungsgemäßen Brenner 1 herangezogen werden, indem beispielsweise die die Düsen 15 umfassende Wasser-/Dampf-Vormischeindüseinrichtung 14 bei einem bekannten Brenner nachgerüstet wird.

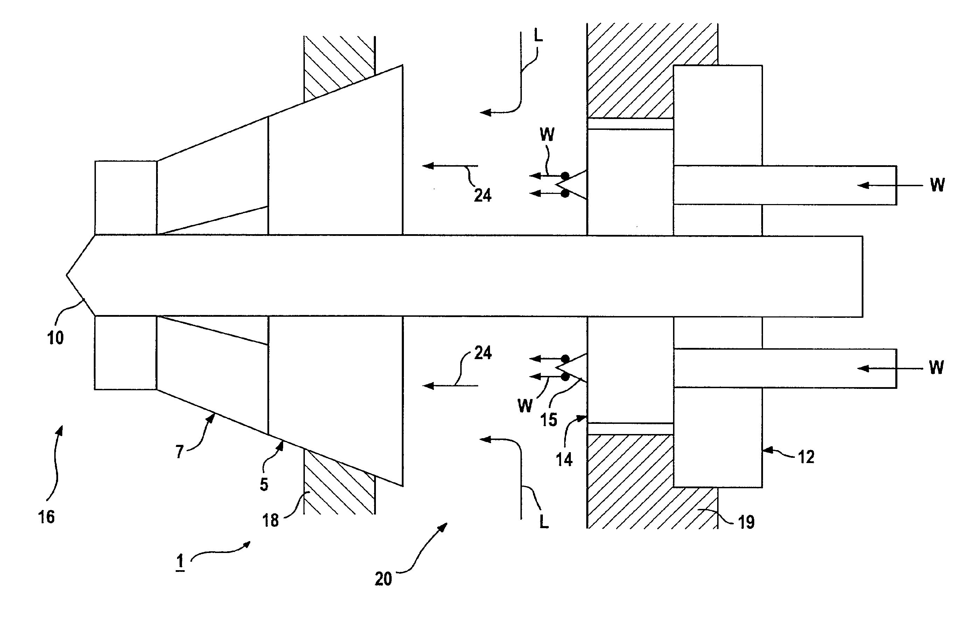

Abgesehen von der durch die Erfindung erzielten Reduzierung von bei der Verbrennung entstehenden Stickoxiden wird auch eine Leistungserhöhung (Power Augmentation) der Turbine erreicht, insbesondere dann, wenn eine Ausführungsform gemäß der Figur zum Einsatz kommt.

Ferner wird durch die Erfindung die Temperatur der Kühlluft abgesenkt, welche der Verbrennungsluft entnommen wird. Dadurch ist die Kühlung der Leitschaufeln der Turbine verbessert.

## Patentansprüche

1. Verfahren zum Betrieb mindestens eines Brenners (1), insbesondere einer Gasturbine, wobei dem Brenner Verbrennungsluft (L), Wasser (W) und ein Brennstoff zugeführt wird, wobei das Wasser (W) zerstäubt wird,
**dadurch gekennzeichnet, dass** in einem ersten Schritt das zerstäubte Wasser (W) mit der Verbrennungsluft (L) zu einem Wasser-Verbrennungsluft-Gemisch (24) vermischt wird und dass in einem zweiten Schritt das Wasser-Verbrennungsluft-Gemisch (24) mit dem Brennstoff zu einem Wasser-Verbrennungsluft-Brennstoffgemisch vermischt wird.

2. Verfahren nach Anspruch 1, wobei der Brenner (1) als Hybridbrenner für einen Betrieb mit Gas und Öl als alternative Brennstoffe ausgelegt ist und der Brenner (1) mit einer Gasvormisch- und einer Ölvormisch-Leitung verbunden ist.

3. Verfahren nach Anspruch 2,
**dadurch gekennzeichnet, dass** der Brenner (1) mit Öl als Brennstoff betrieben wird und das Wasser der Gasvormisch-Leitung zugeführt wird.

4. Verfahren nach Anspruch 2,
**dadurch gekennzeichnet, dass** der Brenner (1) mit Gas als Brennstoff betrieben wird und das Wasser (W) der Ölvormisch-Leitung zugeführt wird.

5. Verfahren nach einem der Ansprüche 2 bis 4,
**dadurch gekennzeichnet, dass** eine Armatur vorgesehen ist, mittels welcher das Wasser (W) in Abhängigkeit von einer momentanen Betriebsart des Brenners hinsichtlich des zugeführten Brennstoffs entweder der Gasvormisch-Leitung oder der Ölvormisch-Leitung zugeführt wird.

6. Brenner (1), insbesondere einer Gasturbine **gekennzeichnet durch** erste Mittel (14,20) zur Vermischung von Wasser und Verbrennungsluft zu einem Wasser-Verbrennungsluft-Gemisch (24) , wobei das Wasser (W) zerstäubt wird und zweite, von den ersten Mitteln unterschiedliche, Mittel (5,7) zur Vermischung des Wasser-Verbrennungsluft-Gemisches (24) mit einem Brennstoff zu einem Wasser-Verbrennungsluft-Brennstoff-Gemisch.

7. Brenner (1) nach Anspruch 6, wobei der Brenner (1) als Hybridbrenner für einen Betrieb mit Gas und Öl als alternative Brennstoffe ausgebildet ist und der Brenner mit einer Gasvormisch- und einer Ölvormisch-Leitung verbunden ist.

8. Brenner (1) nach Anspruch 7,
**dadurch gekennzeichnet, dass** das Wasser (W) in die Gasvormisch-Leitung eingespeist ist.

9. Brenner (1) nach Anspruch 7,
**dadurch gekennzeichnet, dass** das Wasser in die Ölvormisch-Leitung eingespeist ist.

10. Brenner (1) nach einem der Ansprüche 7 bis 9,
**dadurch gekennzeichnet, dass** das Wasser (W) in Abhängigkeit von einer momentanen Betriebsart des Brenners hinsichtlich des zugeführten Brennstoffs mittels einer Armatur, bevorzugt einer Dreiwege-Armatur, entweder in die Gasvormisch-Leitung oder in die Ölvormisch-Leitung eingespeist ist.
